Europäisches Patentamt

European Patent Office

Office européen des brevets

(11) Publication number: **0 480 066 A1**

## EUROPEAN PATENT APPLICATION
### published in accordance with Art. 158(3) EPC

(21) Application number: **91908565.4**

(22) Date of filing: **25.04.91**

(86) International application number:
**PCT/JP91/00566**

(87) International publication number:
**WO 91/16147 (31.10.91 91/25)**

(51) Int. Cl.⁵: **B05D 1/32**, B05B 15/04

(30) Priority: **26.04.90 JP 110820/90**

(43) Date of publication of application:
**15.04.92 Bulletin 92/16**

(84) Designated Contracting States:
**DE FR GB IT SE**

(71) Applicant: **NAGOYA OILCHEMICAL CO., LTD.**
**213-5 Honowari, Minamishibata-cho**
**Tokai-shi, Aichi476(JP)**

(72) Inventor: **HORIKI, Seinosuke, Nagoya**
**Oilchemical Co.,Ltd.**
**213-5, Honowari, Minamishibata-cho**

**Tokai-shi, Aichi 476(JP)**
Inventor: **MAKINO, Reiji, Nagoya Oilchemical**
**Co.,Ltd.**
**213-5, Honowari, Minamishibata-cho**
**Tokai-shi, Aichi 476(JP)**
Inventor: **IKEDA, Kenji Nagoya Oilchemical**
**Co., Ltd.**
**213-5, Honowari Minamishibata-cho**
**Tokai-shi**
**Aichi 476(JP)**

(74) Representative: **Senior, Alan Murray**
**J.A. KEMP & CO 14 South Square Gray's Inn**
**London WC1R 5EU(GB)**

(54) **METHOD OF MASKING.**

(57) An object of the present invention is to easily realize quick and automatic mounting of a multiplicity of masking materials. For this, in successively conveying the masking materials by a belt conveyor to a pick-up position of a mounting device, in order for the masking materials to be accurately picked up by the mounting device, the masking materials on the belt conveyor are positioned by a guide means.

Fig.1

FIELD OF THE INVENTION

The present invention relates to a method for masking wherein parts of the surface of an article are protected by masking members from a surface treatment.

For instance, a protective paint such as a polyvinyl-chloride sol, a tar-urethane, and the like have been coated on the underside of the floor of cars for the purpose of corrosion, sound, and vibration proofing. When said protective paint is coated on said underside of the floor of cars, the holes in said underside of the floor of cars should be protected by masking members that do not to stick to said protective paint on the insides or the surroundings of said holes, and said holes may be such as drainage holes, cable holes, bolt holes, parts penetrating holes and the like.

Further, places where parts are attached, such as brackets, bosses and the like should be protected by the masking members that do not stick to said protective paint.

More than 200 pieces of such masking members are attached in said coating of said underside of the floor of cars, and many trained workmen may be necessary to quickly attach such a large number of masking members to the places to be protected so as not to obstruct the car-manufacturing line.

Hitherto, adhesive tape has been used as a masking member but in the case of adhesive tape, such adhesive tape has to be cut in pieces having suitable shapes and sizes. Whenever such adhesive tape is attached to a place to be protected and the thickness of said adhesive tape is small, said adhesive tape may be buried in the coating film and it is difficult to remove said adhesive tape from said place.

DESCRIPTION OF THE PRIOR ART

Hitherto, masking members made of a foamed plastic such as a foamed polystyrene have been provided instead of said adhesive tape (Tokkai Sho 64-43376, Tokkai Sho 64-85171 etc). Said masking members made of foamed plastic may be easily modeled into suitable shapes, and the thickness of said masking members may be easily increased so that said masking members may be easily attached and removed to/from the places to be protected, and now an important problem is how to attach and remove said masking members to/from said places to be protected by employing a robot.

In the automatic attaching and removing of said masking members, it may be important to smoothly supply each said masking member to an attaching spot.

To supply each said masking member, it may be considered to convey said masking member from the deposit spot of said masking member to the attaching spot by using a conveyer. Nevertheless, as the pick-up spot of the robot is fixed, it is necessary to fix said masking member on the conveyer so as it does not move from said fixed pick-up spot.

DISCLOSURE OF THE INVENTION

The present invention provides a method for masking characterized by arranging set-position equipment at the pick-up spot of an attaching means (5) at the rear end of a belt conveyer (1) when masking members (3) are put on said belt conveyer (1) at the front end (11) and picked up by said attaching means (5) at the rear end (12) to attach said masking members (3) to the places to be protected, wherein said set-position equipment (4) consists of left and right wing panels (41), (42) or left and right guide bars (41)C, (42)C which open towards the front end of said belt conveyer (1).

The masking members (3) are put on said conveyer (1) one by one at the front end to be conveyed to the pick-up spot of said attaching means (5) at the rear end. At the pick-up spot, said masking members (3) are one by one set at the pick-up spot which is located at the rear most position of said set-position equipment (4) being guided by said left and right wing panels (41), (42) or left and right guide bars (41)C, (42)C which open towards the front end (11) of said belt conveyer (1). Thus, said masking members (3) can be certainly picked up by said robot attaching means (5) one by one at the rear end (12) of said belt conveyer (1).

Accordingly, in the present invention, it becomes possible to supply the masking members automatically and thus, the attaching process of the masking members can be performed fully-automatically.

BRIEF DESCRIPTION OF THE DRAWINGS

Figs. 1 to 7 show an embodiment of the present invention and,
Fig. 1 is a partially omitted perspective view.
Fig. 2 is a perspective view of a masking member.
Fig. 3 is a partial plane view of the rear end of the belt conveyer.
Fig. 4 is a partial plane view showing a masking member set at the pick-up spot.
Fig. 5 is a perspective view showing the picking up of a masking member.
Fig. 6 is a partial side sectional view showing the attaching of a masking member.
Fig. 7 is a partial side view showing the putting of a masking member on the belt conveyer using a cassette.

Figs. 8 and 9 each show another embodiment and,

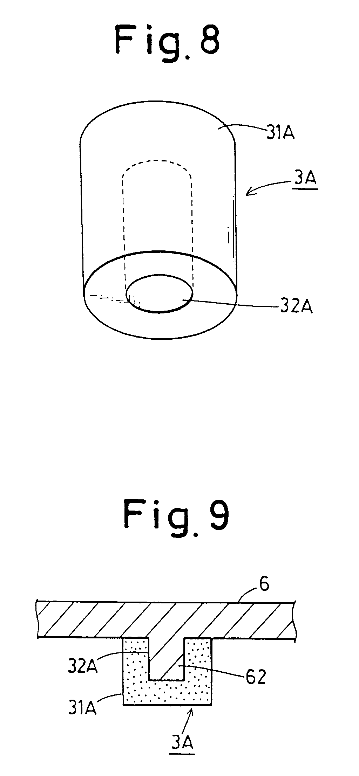

Fig. 8 is a perspective view of another masking member.

Fig. 9 is a partial side sectional view showing the attaching of a masking member.

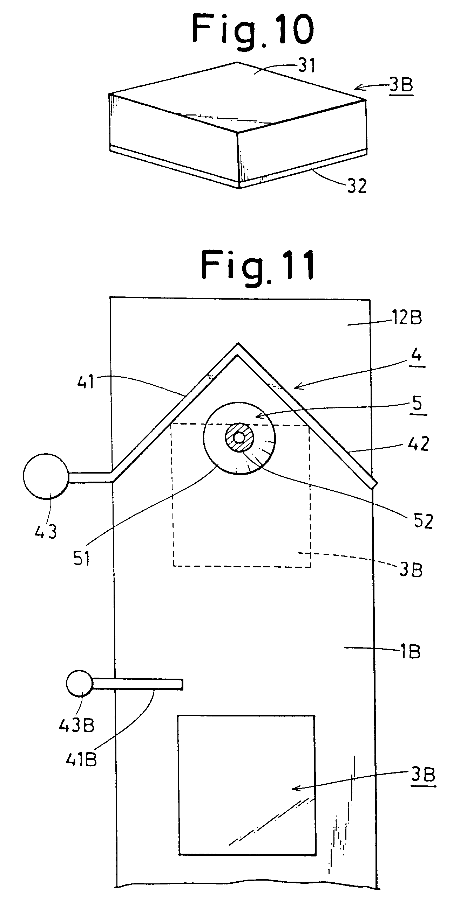

Figs. 10 to 15 each show still another embodiment and,

Fig. 10 is a perspective view of still another masking member.

Fig. 11 is a partial plane view of the end of the belt conveyer before correction of a masking member.

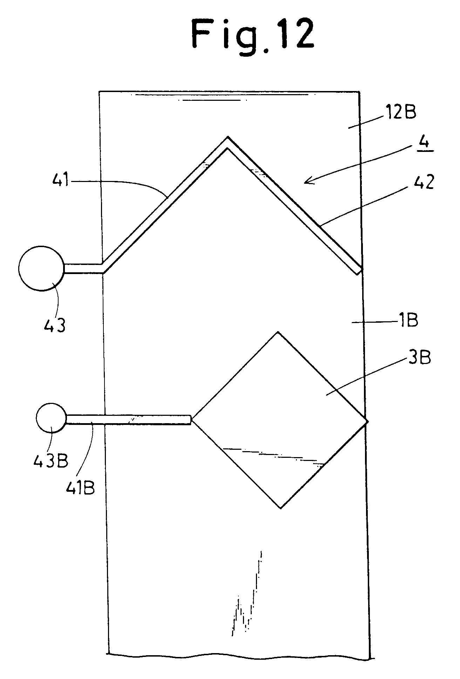

Fig. 12 is a partial plane view of the end of the belt conveyer when a masking member is corrected.

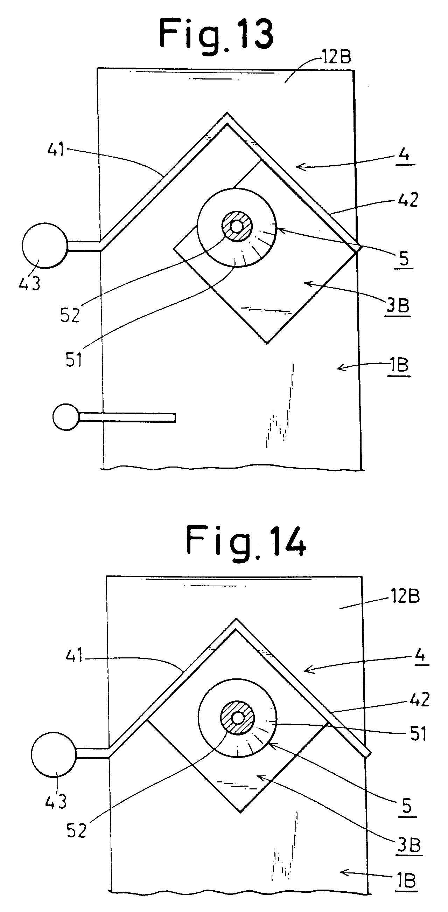

Fig. 13 is a partial plane view of the end of the belt conveyer when a masking member is guided by the guide panels.

Fig. 14 is a partial plane view showing a masking member set at the pick-up spot.

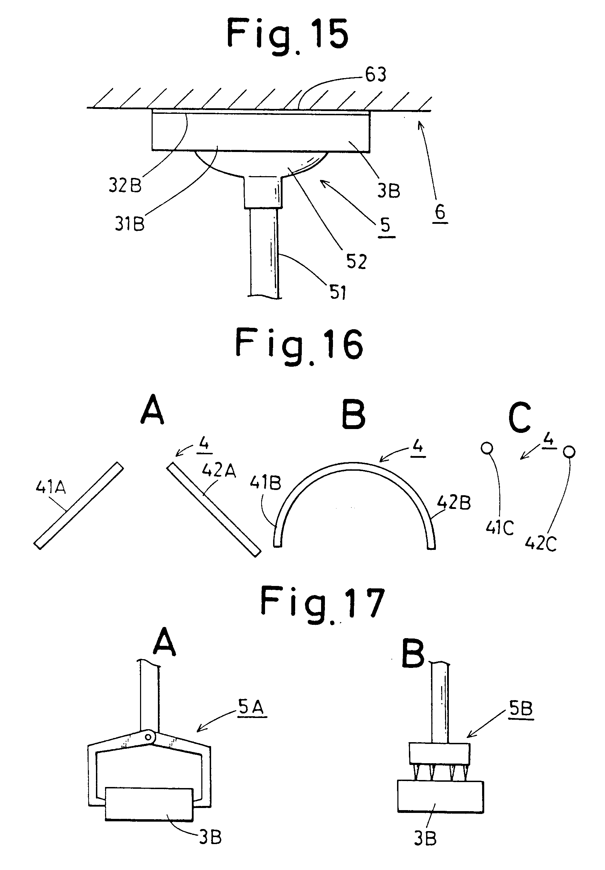

Fig. 15 is a partial sectional view showing the attaching of a masking member.

Fig. 16, A, B and C are plane views showing respectively further embodiments of the guide panels and the guide bars.

Fig. 17 A and B are front views showing respectively further embodiments of the attaching means.

In the DRAWINGS,

(1)
belt conveyer
(11)
front end
(12), (12)B
rear end
(3), (3)A, (3)B
masking member
(4)
set-position equipment
(41), (42), (41)A, (42)A, (41)B, (42)B
guide panel
(41)C, (42)C
guide bar
(5)
attaching means

## DESCRIPTION OF THE INVENTION

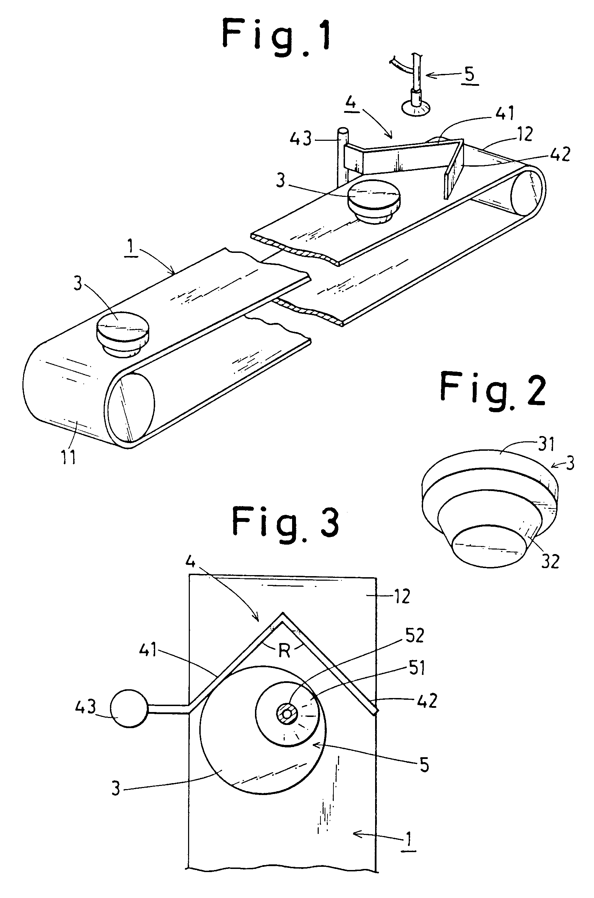

Figs. 1 to 4 each show an embodiment of the present invention. In the Figures, (1) is a belt conveyer and a plug-type masking member (3) is put on the front end (11) of said belt conveyer (1) and picked up at the rear end (12) by said attaching means (5). At the rear end (12) of said belt conveyer (1), set-position equipment (4) consisting of left and right wing guide panels (41), (42) is arranged on said belt conveyer (1) being supported by a pole (43) and said guide panels (41), (42) open towards the front end of said belt conveyer (1) in a V-shape at an open angle R = 90°.

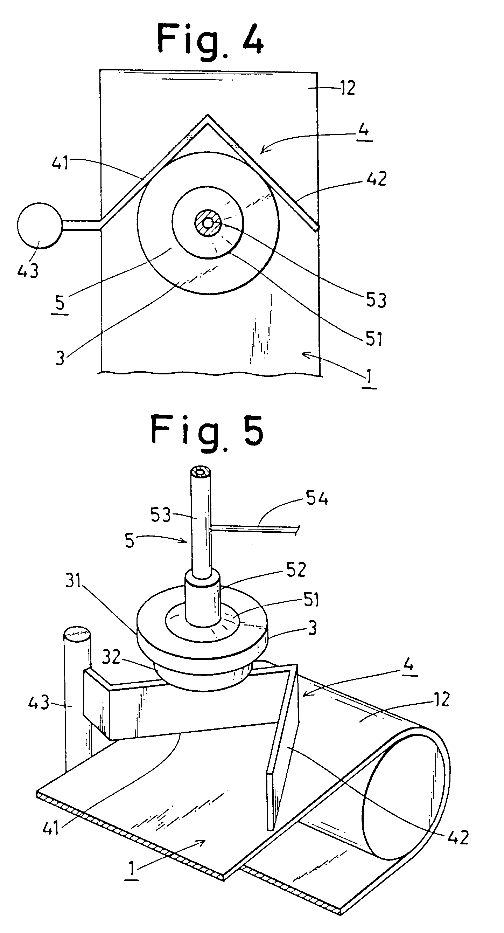

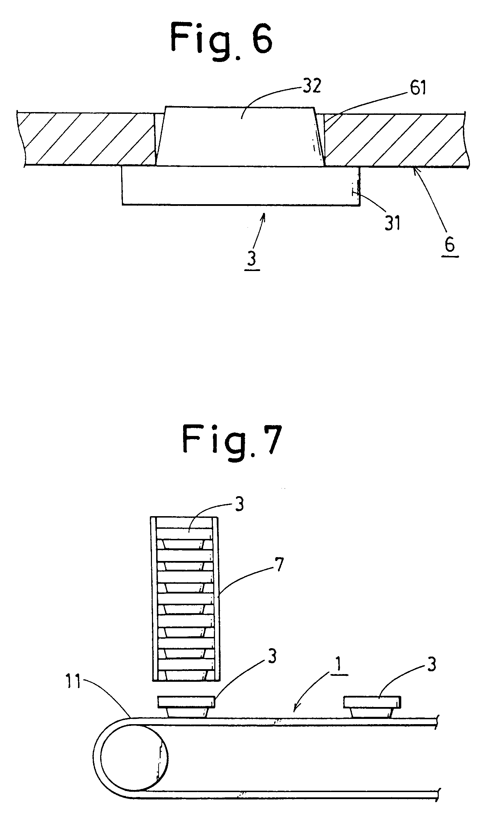

Said masking member (3) is made of a plastic such as polystyrene, polyethylene, polypropylene, polyvinylchloride, polyurethane, melamine resin, urea resin, phenol resin and the like, a reinforced plastic wherein an inorganic filler such as calcium carbonate, talc, bentonite and the like is mixed in said plastic, a foamed plastic of said plastic, a synthetic rubber such as styrene-butadiene rubber, acrylonitrile-butadiene rubber and the like, a natural rubber, a molded fiber material wherein wood fiber, synthetic fiber, natural fiber, inorganic fiber etc. is bound by a binder to mold wood, paper, reclaimed paper, corrugated card-board, metal, and a complex or a laminate of two or more of said materials, and as shown in Fig. 2, a flange part (31) is formed on the upperside of said masking member (3) and an inserting part (32) is formed on the lower side of said masking member (3). As shown in Fig. 1, said masking members (3) are one by one put on the belt conveyer (1) at the front end (11). Thus said masking members (3) are conveyed from the masking member depositing spot to the masking member attaching spot and said masking members (3) are one by one caught by the set-position equipment (4) at the rear end (12) of said belt conveyer (1) as shown in Fig. 3. After then said masking members (3) are one by one guided by said guide panels (41), (42) of said set-position equipment (4) and as shown in Fig. 4, said masking members (3) are finally and individually located at the rear-most position of said set-position equipment (4). Said position may be directly below said attaching means (5) . In this position, said masking members (3) slide on said belt conveyer (1). As shown in Fig. 5, said attaching means (5) consists of a sucker (51) made of a flexible elastic material such as rubber, flexible plastic, and the like or a rigid material such as rigid plastic, metal, and the like, a supporting pipe (53) inserted into the attaching part (52) of said sucker (51), and a vacuum-ventilation tube (54) connected to said supporting pipe (53), and said attaching means (5) is equipped to a robot not shown in the Figures and said masking member (3) is put on said belt conveyer (1) and located right below said attaching means (5) and is picked up by said sucker (51) by vacuum-suction. Then, said masking member (3) is attached in a hole (61) of an article (6) to be protected by inserting the inserting part (32) of said masking member (3) into said hole (61) as shown in Fig. 6 and air is allowed into said sucker (51) of said attaching means (5) through said vacuum-ventilation tube (54) to release said masking member (3) from said sucker (51).

In this embodiment, it may be preferable to stop said belt conveyer (1) intermittently when said masking member (3) is picked up by said attaching means (5) but said intermittent running of said belt converyer (1) may not be a necessary condition for the present invention since said masking member is put on said belt conveyer (1) so as to slide on said belt conveyer (1).

In this embodiment, when a plural number of said masking members (3) is put on said belt conveyer (1) one by one, workers may put on said masking members (3) by hand but it is preferable to use a cassette in which a plural number of said masking members (3) are charged as shown in Fig. 7. Figs. 8 and 9 each show another embodiment of the masking member (3)A used in the present invention. As shown in the Figures, said masking member (3)A has a structure wherein an inserting hole (32)A is formed in a cylinderical body (31)A. Said masking member (3)A is guided to the rear-most position of said set-position equipment (4) at the rear end (12) of said belt conveyer (1), the same as for the former embodiment and at this position, said masking member (3) is vacuum-sucked by said sucker (51) of said attaching means (5) and, as shown in Fig. 9, a boss (62) of an article (6) is covered with said masking member (3)A to protect said boss (62).

Figs. 10 to 15 each show still another embodiment of the masking member (3)B used in the present invention. Said masking member (3)B has a structure wherein an adhesive layer (32)B is formed on the lower side of a panel body (31)B having a square shape as shown in the Figures. Said masking member (3)B may be put on a stick-proof belt conveyer (1)B on which a release agent is coated or a release sheet such as polyethlene sheet, polypropylene sheet, polyvinyl fluoride sheet, polyvinylidene fluoride and the like is covered and said masking member (3)B is guided to the rear-most position of said set-position equipment (4) the same as for the former embodiments, but since said masking member (3)B has a square shape as shown by the dotted line in Fig. 11, said masking member (3)B should be put on said belt conveyer (1)B slanting from the longitudinal direction of said belt conveyer (1)B or said masking member (3)B may be caught between said guide panels (41), (42) and as a result it may be impossible to guide said masking member (3)B to the rear-most position of said set-position equipment (4). Accordingly, a correcting bar (41)B supported by a pole (43)B is arranged in front of said set-position equipment (4) to make said correcting bar (41)B come into contact with said masking member (3)B and give said masking member (3)B a slant from the longitudinal direction of said belt conveyer (1)B as shown in Fig. 12. Thus said masking member (3)B can be guided by said guide panels (41), (42) without being caught as before described between said guide panels (41), (42) and as shown in Fig. 14, said masking member (3)B may be located at the rear-most position of said set-position equipment (4) right below said attaching means (5). Then said masking member (3)B is vacuum-sucked by said sucker (51) of said attaching means (5) and attached to a surface part (63) of an article (6) to be protected by said adhesive layer (32)B as shown in Fig. 15.

Besides the above mentioned embodiments, in said set-position equipment (4), said left and right wing panels (41)A and (42)A may be separated from each other as shown in Fig. 16, A and further, said left and right wing panels (41)B and (42)B may be connected together to form a U-shape as shown in Fig. 16, B. Further, to guide said masking member smoothly, a preferable angle between said left wing and right wing may be less than 90°. Still further, in the case of a masking member in which the plane shape is a circle, a pair of guide bars (41)C and (42)C may be arranged on the left side and right side as shown in Fig. 16, C.

Still further, in the present invention, a pinch-type attaching means (5)A as shown in Fig. 17, A, a needle type attaching means (5)B as shown in Fig. 17, B and the like may be provided as the attaching means to pick-up said masking member (3).

## Claims

1. A method for masking characterized by arranging set-position equipment at the pick-up spot of an attaching means at the rear end of a belt conveyer when masking members are put on said belt conveyer at the front end to attach said masking members to places to be protected, wherein said set-position equipment consists of left and right wing panels or left and right guide bars which open towards the front end of said belt conveyer.

# Fig.1

# Fig.2

# Fig.3

# Fig. 4

# Fig. 5

# Fig. 6

# Fig. 7

# Fig. 8

# Fig. 9

# Fig.10

# Fig.11

# Fig.12

# Fig.13

# Fig.14

# Fig.15

63

32B

31B

5

52

51

3B

6

# Fig.16

A

B

C

4

41A

42A

4

41B

42B

4

41C

42C

# Fig.17

A

5A

3B

B

5B

3B

# INTERNATIONAL SEARCH REPORT

International Application No PCT/JP91/00566

## I. CLASSIFICATION OF SUBJECT MATTER (if several classification symbols apply, indicate all) [6]

According to International Patent Classification (IPC) or to both National Classification and IPC

Int. Cl$^5$  B05D1/32, B05B15/04

## II. FIELDS SEARCHED

Minimum Documentation Searched [7]

| Classification System | Classification Symbols |
|---|---|
| IPC | B05D1/32, B05B15/04 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| X | JP, A, 63-171661 (Toyota Motor Corp.), July 15, 1988 (15. 07. 88), (Family: none) | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 12, 1991 (12. 07. 91) | July 29, 1991 (29. 07. 91) |

| International Searching Authority | Signature of Authorized Officer |
|---|---|
| Japanese Patent Office | |

Form PCT/ISA/210 (second sheet) (January 1985)